Europäisches Patentamt

European Patent Office

Office européen des brevets

(11) Publication number: **0 278 559 B1**

## EUROPEAN PATENT SPECIFICATION

(45) Date of publication of patent specification: **29.07.92**

(51) Int. Cl.⁵: **C08L 77/00**, C08K 3/02, C08K 3/26, C08K 7/14

(21) Application number: **88200173.8**

(22) Date of filing: **02.02.88**

(54) **Polyamide compositions.**

(30) Priority: **11.02.87 GB 8703161**

(43) Date of publication of application:
**17.08.88 Bulletin 88/33**

(45) Publication of the grant of the patent:
**29.07.92 Bulletin 92/31**

(84) Designated Contracting States:
**AT BE CH DE ES FR GR IT LI LU NL SE**

(56) References cited:
**EP-A- 0 006 549**
**EP-A- 0 092 776**
**EP-A- 0 205 662**
**DE-A- 2 703 052**
**DE-B- 2 203 704**

(73) Proprietor: **BIP CHEMICALS LIMITED**
**20 St. Mary's Parsonage**
**Manchester M3 2NL(GB)**

(72) Inventor: **Williams, Richard Stuart**
**201 Pennine Road**
**Bromsgrove Worcestershire(GB)**

(74) Representative: **Hadfield, Robert Franklin et al**
**Bowdon House PO Box 20 Ashburton Road**
**West Trafford Park**
**Manchester M17 1RA(GB)**

Rank Xerox (UK) Business Services

**Description**

This invention relates to polyamide compositions, and more particularly to such compositions which contain flame retardants.

In moulding compositions of polyamides such as nylon 6 and nylon 66 flame retardants are widely used materials and various types are known. For Example brominated or chlorinated compounds may be used, particularly in conjunction with a synergist such as antimony trioxide. These materials, however, lower the electrical tracking resistance of the resulting composition, this being a particularly acute problem in glass-filled systems. Red phosphorus may be employed to obtain a higher tracking resistance with flame retardancy but the tracking resistance is still not as good as desirable particularly in glass filled systems. Theysohn et al. (EP 0 092 776) disclose a thermoplastic polyamide composition containing red phosphorus as a flame retardant and an inorganic metal salt, being preferably Cd-, Zn-, Al- and Sn- salts as a stabilizer for the phosphorus.

We have now found a combination of additives through the use of which high tracking resistance may be attained in combination with good flame retardancy.

According to the invention a polyamide moulding composition comprises a thermoplastic polyamide in the amount of at least 40 per cent by weight of the composition, a flame retardant consisting of red phosphorus, said red phosphorus making up 5 to 15 per cent by weight of the composition, and magnesium carbonate in an amount of 5 to 50 per cent by weight of the composition, and reinforcing fibres in an amount of 5 to 40 per cent by weight of the composition, the total amount of said flame retardant and said magnesium carbonate being not more than 55 per cent by weight of the composition and the amount of red phosphorus and magnesium carbonate being such that

$$3P + C \geqq 30$$

where P is per cent by weight of red phosphorus in the total composition and C is per cent by weight of magnesium carbonate in the total composition.

The thermoplastic polyamide is preferably an injection mouldable polymer with a melting point above 180°C for example, nylon 6 or nylon 66.

The flame retardant has red phosphorus as its ingredient but the red phosphorus is preferably treated in order to reduce its handling difficulties, since red phosphorus alone can be very dangerous in handling. Thus the red phosphorus may be carried in a polymeric carrier, and/ or may be encapsulated with a suitable substance such as a polymer or resin.

In the present invention the magnesium carbonate is used as a powdered solid material which may be in an uncoated or coated grade. It has various forms, pure magnesium carbonate (magnesite), hydrated magnesium carbonate, basic magnesium carbonate, all of which may be used, and we have also found that the mineral dolomite may be used. Dolomite contains magnesium carbonate in a mixed salt, magnesium calcium carbonate, and as will be shown in the Examples it has an effect similar to pure magnesium carbonate, although slightly more may have to be used for a given performance.

We have found that the addition of the magnesium carbonate has a noticeably beneficial effect on the electrical tracking resistance of the flame retarded composition, and on the erosion resistance of the composition during the test for electrical tracking resistance . In general, by using both the red phosphorus and the magnesium carbonate it is possible to attain a composition which has both a high tracking resistance and a low flammability eg a V0 flammability rating. In general if the higher loadings of red phosphorus flame retardant are used, less magnesium carbonate is needed to attain a good tracking resistance with good flammability rating.

If low loadings of red phosphorus are used a good tracking resistance is obtainable with low loading of the magnesium carbonate but to obtain a good flammability rating as well the loading of magnesium carbonate needs to be increased.

We have found that with the lower loadings of phosphorus a small addition of magnesium carbonate has a beneficial effect on the electrical tracking resistance but a detrimental effect on flammability rating. However, increasing the amount of magnesium carbonate will ultimately restore a good flammability rating. The formula $3P + C \geqq 30$ reflects the fact that the amount of red phosphorus needed for a given effect on flammability rating is much less than that of magnesium carbonate.

Of the reinforcing fibres that are included in the composition, the particularly preferred reinforcement is chopped glass fibres, and preferably the amount of such fibres in the composition is in the range 15 to 35 per cent by weight of the composition. Other types of fibres may be used however, for example inorganic fibres such as ceramic fibres, wollastonite, and organic heat resistant fibres such as aramide fibres.

Other fire retarding agents may also be included in the compositions of this invention provided that they do not have a detrimental effect on the electrical tracking resistance of the composition. Thus halogenated fire retardants or antimony trioxide are not to be used.

If desired other ingredients may also be added to the compositions of this invention, such as pigments, stabilisers, lubricants, mineral fillers, etc, as is usual in a moulding composition.

The invention will now be described in more detail by means of examples.

## Examples

In the following examples all the compositions were made by first blending the ingredients together, then feeding the mixture through a Werner and Pfleiderer ZSK30 extruder under the following conditions.

For Nylon 66 280°C barrel temperatures

For Nylon 6 250°C barrel temperatures

The screw speed used was 300-350 rpm but adjusted where necessary to maintain a reasonable torque. Feed rate was adjusted to give a torque reading between 60 and 95%.

Test mouldings were made from each composition using standard injection moulding techniques and the samples so made were tested for electrical tracking resistance and flammability.

## Electrical Tracking Resistance

The test equipment used is that of the Comparative Tracking Index test of the European Standard (DIN 53480). An aqueous solution containing 0.1% $NH_4Cl$ and 0.5% surfactant (Nansa HS 85/S ex Albright and Wilson) was dropped at 30 second intervals on to the surface of the mouldings between two electrodes carrying the applied voltage (up to 600 volts). Platinum electrodes were used, with trips at 0.5 A and 2 s.

Results are expressed in the tables below for each applied voltage as "failures" at a stated number of drops, or "passes" at 100 drops total. The erosion of the sample is measured as the weight loss in grammes after the application of 100 drops of solution.

## Flammability Testing

The method used was the standard Underwriters Laboratories test method UL94. V0 means that the specimens burnt for less than 10s after removal of flame, that the total burn time for ten applications of the flame on five specimens was less than 50 s. In addition no flaming drops are permitted. In V1 classification no specimen burns for longer than 30 s after the application of the flame and the total burning time for 10 specimens is less than 250 s. No flaming drops are permitted. The same criteria apply in V2 classification except that some flaming drops are permitted.

In addition to these classifications, the average burning time for each application of flame was calculated and the occurrence of non-flaming drops was noted (10 specimens).

## Examples 1 to 3

A series of compositions of nylon 66 was prepared using as flame retardant granules of encapsulated red phosphorus, the latter being masterbatched in a polyamide carrier (70% by weight of red phosphorus). Powdered uncoated pure magnesium carbonate (magnesite) was used and the glass fibres were grade R23D from Owens Corning Fibreglass, chop length 4.5mm.

In Table I below the formulations are given in parts by weight.

TABLE I

| Example No. | 1 | 2 | 3 |
|---|---|---|---|
| Nylon 66 | 62.10 | 57.10 | 42.10 |
| Glass Fibre | 25.0 | 25.0 | 25.0 |
| Flame Retardant (70% Red P) | 12.90 | 12.90 | 12.90 |
| Magnesium Carbonate | - | 5.0 | 20.0 |
| NB The above loading of flame retardant corresponds to 9% by weight of red phosphorus in the total composition. | | | |

Test samples were moulded from each composition and the results of electrical tracking resistance tests on each are given below in Table II.

TABLE II

| Example No. | 1 | 2 | 3 |
|---|---|---|---|
| 600 V | NT | NT | P>60 |
| 500 V | F/4 | F/16 | P>60 |
| 400 V | F/15 | P>100 | P>100 |
| F = fail P = pass NT = not tested | | | |

In this Table in each Example the level of flame retardant corresponds to 9% by weight red phosphorus in the total composition. It can be seen that an improved electrical tracking resistance has been obtained in the compositions containing the magnesium carbonate.

Test samples were also subjected to flammability testing by the Underwriters Laboratories UL94 test method and the results obtained are shown below in Table III.

TABLE III

| Example No. | 1 | 2 | 3 |
|---|---|---|---|
| UL94 test rating | | | |
| Class  3mm | VO | VO | VO |
| 1.5mm | VO | VO | VO |
| Burn Time (sec) | | | |
| 3mm | 0 | 0.5 | 0.3 |
| 1.5mm | 0.5 | 0.8 | 1.4 |
| Dripping | 3NF at 1.5mm* | 2NF at 1.5mm | None |

\* NF = non-flaming

Here it can be seen that the V0 flammability ratings have been retained with the higher tracking resistance in Examples 2 and 3.

Examples 4 to 7

A further series of compositions of nylon 66 was prepared using the same ingredients as in Examples 1 to 3. In this series the loading of flame retardant corresponds to 5% by weight red phosphorus in the composition, and in one Example (Example 7) the nylon 66 is blended with a minor proportion of nylon 6. The formulations are given in Table IV in parts by weight.

TABLE IV

| Example No | 4 | 5 | 6 | 7 |
|---|---|---|---|---|
| Nylon 66 | 67.90 | 57.90 | 47.90 | 37.90 |
| Nylon 6 | - | - | - | 10.0 |
| Glass Fibre | 25.0 | 25.0 | 25.0 | 25.0 |
| Flame Retardant (70% Red P) | 7.10 | 7.10 | 7.10 | 7.10 |
| Magnesium Carbonate | - | 10.0 | 20.0 | 20.0 |

Test samples were moulded from each composition and the results of electrical tracking resistance tests on each are given below in Table V.

TABLE V

| Example No | 4 | 5 | 6 | 7 |
|---|---|---|---|---|
| 600 V | NT | F/8 | NT | Fail |
| 500 V | F/8 | P>60 | P>100 | P>70 |
| E (g)* | | | 0.037 | |
| 400 V | P>100 | P>60 | P>100 | P>60 |
| E (g) * | 0.282 | | 0.013 | |

F = fail P = pass *E = Erosion from sample passing test, measured in grammes.

In this Table it can be seen that an improved electrical tracking resistance has been obtained in the compositions containing the magnesium carbonate, and in the blend composition (Example 7) the electrical tracking resistance remains better than that in Example 4 despite the presence of the nylon 6.

Test samples were also subjected to flammability testing by the Underwriters Laboratories UL94 test method and the results obtained are shown below in Table VI.

TABLE VI

| Example No | 4 | 5 | 6 | 7 |
|---|---|---|---|---|
| UL94 test rating | | | | |
| Class 3mm | VO | Fail | VO | VO |
| 1.5mm | V1 | V2 | VO | V2 |
| Burn Time (sec) | | | | |
| 3mm | 0.7 | – | 1.9 | – |
| 1.5mm | 2.8 | – | 1.8 | – |
| Dripping | 3NF at 1.5mm | – | None | – |

\* NF = non-flaming

Here it can be seen that the flammability rating has been decreased by the lower loading of Magnesium Carbonate in Example 5. However V0 ratings have been regained with the higher tracking resistance in Examples 6 and 7.

Examples 8 to 11

A series of nylon 6 compositions was prepared using other ingredients as used in the previous examples. The formulations are given in parts by weight in Table VII.

TABLE VII

| Example No | 8 | 9 | 10 | 11 |
|---|---|---|---|---|
| Nylon 6 | 62.1 | 57.1 | 67.9 | 47.9 |
| Glass Fibres | 25.0 | 25.0 | 25.0 | 25.0 |
| Flame Retardant (70% Red P) | 12.9 | 12.9 | 7.1 | 7.1 |
| Magnesium Carbonate | - | 5.0 | - | 20.0 |
| NB 12.9 parts of flame retardant corresponds to 9% by weight red phosphorus and 7.1 parts of flame retardant corresponds to 5% by weight red phosphorus. | | | | |

Tests for electrical tracking resistance and flammability rating were carried out on samples moulded from each composition and the results are given below in Table VIII.

TABLE VIII

| Example No | 8 | 9 | 10 | 11 |
|---|---|---|---|---|
| **Electrical tracking resistance** | | | | |
| 250 V | P>80 | NT | NT | NT |
| 300 V | Fail | NT | P>100 | NT |
| 350 V | NT | P>60 | Fail | NT |
| 400 V | NT | Fail | Fail | P>60 |
| 500 V | NT | NT | NT | Fail |
| **UL94 test** | | | | |
| 3mm class | VO | VO | Fail | VO |
| 1.5mm class | V2 | NT | V2 | NT |

It can be seen that the addition of magnesium carbonate in these formulations has again made a considerable improvement to electrical tracking resistance.

Examples 12 to 16

A series of nylon 66 compositions was prepared to investigate using powdered dolomite or powdered calcium carbonate as synergist instead of the pure magnesium carbonate used in previous examples. Other ingredients were as before.

The formulations are given in parts by weight in Table IX.

TABLE IX

| Example No | 12 | 13 | 14 | 15 |
|---|---|---|---|---|
| Nylon 66 | 57.1 | 47.9 | 57.1 | 47.9 |
| Glass fibres | 25.0 | 25.0 | 25.0 | 25.0 |
| Flame Retardant (70% Red P) | 12.90 | 7.10 | 12.90 | 7.10 |
| Dolomite | 5.0 | 20.0 | - | - |
| Calcium Carbonate | - | - | 5.0 | 20.0 |

Again, 12.9 parts of flame retardant corresponds to 9% by weight red phosphorus and 7.10 parts to 5% by weight red phosphorus in the total compostion.

Samples moulded from these compositions were tested briefly for electrical tracking resistance and flammability rating and the results are given below in Table X.

TABLE X

| Example No | 12 | 13 | 14 | 15 |
|---|---|---|---|---|
| 350 V | NT | NT | P>100 | NT |
| 400 V | P>60 | NT | F/22 | P>100 |
| 500 V | Fail | P>60 | NT | F/5 |
| 600 V | NT | Fail | NT | NT |
| UL94 test | | | | |
| 3mm class | VO | V1 | VO | Fail |
| 1.5mm class | V1 | V1 | VO | – |

Examples 12 and 14 compare with Example 1 and Examples 13 and 15 compare with Example 4.

Examples 12 and 13 demonstrate that dolomite has effects on electrical tracking resistance and flammability rating which are similar to those of pure magnesium carbonate but it can be seen from Examples 14 and 15 that the effects of calcium carbonate on electrical tracking resistance are no more than a dilution effects.

**Claims**

1. A polyamide moulding composition free from halogenated fire retardants and antimony trioxide, comprising a thermoplastic polyamide, reinforcing fibres, and a flame retardant consisting of red phosphorus and a carbonate, characterised in that the carbonate is magnesium carbonate (including dolomite), and the proportions of the various ingredients by weight of the composition are:

   thermoplastic polyamide     at least 40%
   reinforcing fibres     5 - 40%
   red phosphorus     5 - 15%
   magnesium carbonate     5 - 50%

   the proportions of red phosphorus and magnesium carbonate together amounting to not more than 55% and being such that

3P + C ≥ 30

where
P is per cent by weight of red phosphorus and
C is per cent by weight of magnesium carbonate in the composition

2. A polyamide moulding composition according to claim 1 in which the thermoplastic polyamide is an injection mouldable polymer with a melting point above 180°C.

3. A polyamide moulding composition according to claim 2 in which the thermoplastic polyamide is nylon 6 or nylon 66.

4. A polyamide moulding composition according to any preceding claim which includes chopped glass fibres as reinforcing fibres.

5. A polyamide moulding composition according to any preceding claim which includes an amount of reinforcing fibres in the range 15 to 35 per cent by weight of the composition.

6. A polyamide moulding composition according to any preceding claim in which the magnesium carbonate is incorporated in the form of magnesite.

7. A polyamide composition according to any one of claims 1 to 6 in which the magnesium carbonate is incorporated as dolomite.

**Revendications**

1. Composition de polyamide de moulage exempte d'agents ignifuges halogénés et de trioxyde d'antimoine, comprenant un polyamide thermoplastique, des fibres de renforcement et un agent ignifuge formé de phosphore rouge et d'un carbonate, caractérisée en ce que le carbonate est le carbonate de magnésium (y compris la dolomite) et les proportions en poids des différents ingrédients de la composition sont :

| | |
|---|---|
| polyamide thermoplastique | au moins 40 % |
| fibres de renforcement | 5 - 40 % |
| phosphore rouge | 5 - 15 % |
| carbonate de magnésium | 5 - 50 %, |

les proportions combinées de phosphore rouge et de carbonate de magnésium ne représentant pas plus de 55 % et étant telles que

3P + C ≥ 30

où P est le pourcentage en poids de phosphore rouge et C est le pourcentage en poids de carbonate de magnésium dans la composition.

2. Composition de polyamide de moulage selon la revendication 1, dans laquelle le polyamide thermoplastique est un polymère moulable par injection, ayant un point de fusion supérieur à 180°C.

3. Composition de polyamide de moulage selon la revendication 2, dans laquelle le polyamide thermoplastique est le Nylon 6 ou le Nylon 66.

4. Composition de polyamide de moulage selon l'une quelconque des revendications précédentes, comprenant des fibres de verre coupées, comme fibres de renforcement.

5. Composition de polyamide de moulage selon l'une quelconque des revendications précédentes, comprenant une quantité de fibres de renforcement valant de 15 à 35 % en poids de la composition.

6. Composition de polyamide de moulage selon l'une quelconque des revendications précédentes, dans laquelle le carbonate de magnésium est incorporé sous forme de magnésite.

7. Composition de polyamide selon l'une quelconque des revendications 1 à 6, dans laquelle le carbonate de magnésium est incorporé sous forme de dolomite.

**Patentansprüche**

1. Polyamid-Formmasse, die frei ist von halogenierten feuerhemmenden Stoffen und Antimontrioxid, umfassend ein thermoplastisches Polyamid, verstärkende Fasern und einen feuerhemmenden Stoff, bestehend aus rotem Phosphor und einem Carbonat, dadurch gekennzeichnet, daß das Carbonat Magnesiumcarbonat (einschließlich Dolomit) ist, und die Verhältnisse der verschiedenen Bestandteile, bezogen auf das Gewicht der Masse, sind:

   | | |
   |---|---|
   | thermoplastisches Polyamid | mindestens 40 % |
   | verstärkende Fasern | 5 bis 40 % |
   | roter Phosphor | 5 bis 15 % |
   | Magnesiumcarbonat | 5 bis 50 % |

   wobei die Anteile an rotem Phosphor und Magnesiumcarbonat zusammen nicht mehr als 55 % betragen und dergestalt sind, daß

   $$3P + C \geq 30$$

   wobei
   P Gew.-% roter Phosphor und
   C Gew.-% Magnesiumcarbonat in der Masse ist.

2. Polyamid-Formmasse nach Anspruch 1, wobei das thermoplastische Polyamid ein Spritzguß-fähiges Polymer mit einem Schmelzpunkt oberhalb 180°C ist.

3. Polyamid-Formmasse nach Anspruch 2, wobei das thermoplastische Polyamid Nylon 6 oder Nylon 66 ist.

4. Polyamid-Formmasse nach einem der vorstehenden Ansprüche, die geschnittene Glasfasern als verstärkende Fasern enthält.

5. Polyamid-Formmasse nach einem der vorstehenden Ansprüche, die verstärkende Fasern in einer Menge im Bereich von 15 35 Gew.-%, bezogen auf die Masse, einschließt.

6. Polyamid-Formmasse nach einem der vorstehenden Ansprüche, in der das Magnesiumcarbonat in Form von Magnesit einverleibt ist.

7. Polyamid-Formmasse nach einem der Ansprüche 1 bis 6, in der das Magnesiumcarbonat als Dolomit einverleibt ist.